# EUROPEAN PATENT APPLICATION

(11) **EP 1 921 105 A1**
(43) Date of publication of application: **14.05.2008**
(21) Application number: 06782979.6
(22) Date of filing: 24.08.2006
(51) Int. Cl.: C08G 65/32, C08B 37/16

(54) **MODIFIED HYDROPHILIC POLYROTAXANE AND CROSS-LINKED POLYROTAXANE**

(30) Priority: 31.08.2005 JP 2005251441
(71) Applicant: Nissan Motor Company Limited, Kanagawa-ku Yokohama-shi, Kanagawa 221-0023 (JP); The University of Tokyo, Bunkyo-Ku, Tokyo 113-8654 (JP)
(72) Inventor: ITO, Kohzo, Tokyo 116-0002 (JP); ARAKI, Jun, Tokyo 104-0052 (JP); SUZUKI, Tatsuya c/o Intellectual Property dpt., Kanagawa 243-0123 (JP); YAMANAKA, Masahiko c/o Intellectual Property dpt., Kanagawa 243-0123 (JP); WATANABE, Kentarou c/o Intellectual Property dpt., Kanagawa 243-0123 (JP)
(74) Representative: Schaeberle, Steffen
(86) International application number: PCT/JP2006/316575
(87) International publication number: WO 2007/026594

(57) **Abstract**

[Summary]

[Object] To provide a modified hydrophilic polyrotaxane which is soluble in water or a water-like solvent, a cross-linked polyrotaxane using this, and a solvent for dissolving the modified hydrophilic polyrotaxane. [Solving means] A modified hydrophilic polyrotaxane has a cyclic molecule, a linear molecule including the cyclic molecule with piercing through the cyclic molecule, and blocking groups which are placed at both end terminals of the linear molecule to prevent the cyclic molecule from leaving from the linear molecule. The cyclic molecule is cyclodextrin, and each of all or a part of the hydroxyl groups in the cyclodextrin is modified with a hydrophilic modification group.

A cross-linked polyrotaxane is formed by combining this modified hydrophilic polyrotaxane and a polymer through the cyclic molecule.

A solvent for dissolving this modified hydrophilic polyrotaxane contains at least one of water and a water-like solvent.

## Description

### TECHNICAL FIELD

This invention relates to a modified hydrophilic polyrotaxane and a cross-linked polyrotaxane, and more particularly relates to a modified hydrophilic polyrotaxane in which a cyclic molecule is cyclodextrin and at least a part of hydroxyl groups of the cyclodextrin is modified with a hydrophilic modification group, a cross-linked polyrotaxane using the modified hydrophilic polyrotaxane, and a solvent for dissolving the modified hydrophilic polyrotaxane.

### BACKGROUND ART

Hitherto, gel materials are extensively used for articles of food, medical products, living goods, industrial products and the like. Although a variety of kinds of polymer compounds are used for these, only two kinds of physical gel and chemical gel exist from the viewpoint of structure.

Physical gel is a gel usually seen in natural world, such as gelatin or agar-agar. Additionally, a greater part of the tissue of a living body is occupied with a variety of physical gels.
Such physical gel constitutes a network under a physical attraction action acted between polymers, and therefore they are low in stability against temperature and solvent.

To the contrary, chemical gel is a huge single molecule in which direct bondings with covalent bonds are made in the whole network, and therefore it is excellent in stability against temperature and solvent so as to be industrially used in various fields.
However, in chemical gel, a cross-linking point is fixed, and therefore an inhomogeneous structure formed by a cross-linking reaction is permanently kept so that it has the defect of being remarkably low in mechanical strength.

Against this, in recent years, a proposition with a new method has been made for a new gel, namely, "slide-ring gel or topological gel" which cannot be classified into both physical gel and chemical gel. Polyrotaxane is used for such slide-ring gel.
In this polyrotaxane, a linear molecule (axis) includes a cyclic molecule (rotator) with piercing through the opening of the cyclic molecule, and blocking groups are placed at the both end terminals of the linear molecule to prevent the cyclic molecule from leaving from the linear molecule. Disclosure is made for a cross-linked polyrotaxane which is formed by cross-linking a plurality of such polyrotaxanes with each other and applicable to the slide-ring gel (See patent literature 1). Patent literature 1: Japanese Patent No. 3475252 publication

In this cross-linked polyrotaxane, the cyclic molecule pierced with the linear molecule is movable along the liner molecule (by a pulley effect) so that the cross-linked polyrotaxane has a viscoelasticy. Accordingly, if a tension is applied to the cross-linked polyrotaxane, the tension is uniformly dispersed under this pulley effect, and therefore it has the excellent characteristics of being difficult to cause crack or flaw, differently from a conventional cross-linked polymer.

### DISCLOSURE OF THE INVENTION

### PROBLEMS TO BE SOLVED BY THE INVENTION

However, in such conventional polyrotaxane, cyclodextrin constituting the cyclic molecule has many hydroxyl groups, in which a hydrogen bond force between hydroxyl groups is high so that the conventional polyrotaxane is almost insoluble in water.
In view of this, an application range of polyrotaxane is liable to be narrow, in which there is such a problem that an application thereof to paint, adhesive and the like requiring a particular durability is difficult.

The present invention is made in view of the problems of such conventional techniques, and an object thereof is to provide a modified hydrophilic polyrotaxane which is soluble in water and a water-like solvent, a cross-linked polyrotaxane using the modified hydrophilic polyrotaxane, and a solvent for dissolving the modified hydrophilic polyrotaxane.

### MEANS FOR SOLVING PROBLEMS

The present inventors have reached the present invention upon finding to attain the above object by modifying each of all or some of the hydroxyl groups in the cyclodextrin constituting the cyclic molecule with a hydrophilic modification group, as a result of eager studies in order to attain the above object.

In other words, a modified hydrophilic polyrotaxane of the present invention is characterized by comprising a cyclic molecule, a linear molecule including the cyclic molecule with piercing through the cyclic molecule, and blocking groups which are placed at both end terminals of the linear molecule to prevent the cyclic molecule from leaving from the linear molecule, in which the cyclic molecule is cyclodextrin, and each of all or some of the hydroxyl groups in the cyclodextrin is modified with a hydrophilic modification group.

Additionally, a preferred embodiment of the modified hydrophilic polyrotaxane of the present invention is characterized in that the linear molecule is polyethylene glycol.

Further, a production method of the modified hydrophilic polyrotaxane of the present invention is characterized by comprising, in order to produce the modified hydrophilic polyrotaxane, (1) mixing cyclodextrin and a linear molecule so as to cause the linear molecule to include cyclodextrin with piecing through the opening section of cyclodextrin, (2) blocking the both end terminals of the linear molecule, serving as the both end terminals of an obtained pseudo-polyrotaxane, with blocking groups so as to make adjustment to prevent the cyclic molecule from releasing from a piercing condition, and (3) modifying hydroxyl group of cyclodextrin of the polyrotaxane with a hydrophilic modification group.

On the one hand, a cross-linked polyrotaxane of the present invention is characterized by combining the modified hydrophilic polyrotaxane as mentioned above and a polymer through the above-mentioned cyclic molecule.

On the other hand, a solvent of the present invention is characterized by being a solvent for dissolving modified hydrophilic polyrotaxane as mentioned above and including water and a water-like solvent.

### EFFECTS OF THE INVENTION

According to the present invention, for example, each of all or some of the hydroxyl groups in the cyclodextrin constituting the cyclic molecule is, for example, modified with the hydrophilic modification group, and therefore it is possible to provide the modified hydrophilic polyrotaxane which is soluble in water or the water-like solvent, a cross-linked polyrotaxane using the modified hydrophilic polyrotaxane, and a solvent for dissolving the modified hydrophilic polyrotaxane.

### THE BEST MODE FOR CARRYING OUT THE INVENTION

Hereinafter, the modified hydrophilic polyrotaxane of the present invention will be discussed in detail. In the specification of the present application, "%" represents % by mass unless otherwise specified.

As discussed above, the modified hydrophilic polyrotaxane of the present invention includes the cyclic molecule, and the linear molecule having the blocking groups at its both end terminals.
Additionally, the linear molecule includes the cyclic molecule with piercing through the opening section of the cyclic molecule. Further, the blocking groups placed at both end terminals of the linear molecule prevents the included cyclic molecule from leaving from the linear molecule. Furthermore, the cyclic molecule is constituted with cyclodextrin, and each of all or some of the hydroxyl groups in the cyclodextrin is modified with the hydrophilic modification group.
With such a configuration, the modified hydrophilic polyrotaxane is soluble in water or the water-like solvent.
Such generation of the solubility in water or the water-like solvent provides a reaction field, typically the cross-linking field, of water or the water-like solvent to polyrotaxane which is hitherto almost insoluble or insoluble in water or the water-like solvent. In other words, the modified hydrophilic polyrotaxane of the present invention is improved in reactivity so that cross-linking with other polymers and modification with a modification group can be readily accomplished in presence of water or the water-like solvent.

Additionally, in the present invention, a modification degree of the cyclodextrin with the hydrophilic modification group is preferably not less than 0.1, more preferably not less than 0.2 and furthermore preferably not less than 0.5 on the assumption that the maximum number of modifiable hydroxyl groups of the cyclodextrin is 1.
If it is less than 0.1, the solubility to water or the water-like solvent is insufficient so that insoluble seed may be produced.
Additionally, the maximum number of the modifiable hydroxyl groups of the cyclodextrin is, in other words, the number of all hydroxyl groups which the cyclodextrin have had before the modification.
Further, the modification degree is, in other words, a ratio of the number of the modified hydroxyl groups to the number of all hydroxyl groups.
In case that the modified hydrophilic polyrotaxane has many cyclodextrins, it is unnecessary that each of all or some of hydroxyl groups is modified with the hydrophilic modification group in each of all the cyclodextrins.

Additionally, in the present invention, a solubility parameter is preferably within a range of from 8.5 to 23.4, more preferably within a range of from 15.0 to 23.4, and furthermore preferably within a range of from 20.0 to 23.4.
If it is less than 8.5, the solubility to the water-like solvent is insufficient so that insoluble seed may be produced.

Further, in the present invention, concrete examples of cyclodextrin are, for example, α-cyclodextrin (the number of glucose: 6), β-cyclodextrin (the number of glucose: 7), γ-cyclodextrin (the number of glucose: 8), dimethylcyclodextrin, glucocylcyclodextrin, and derivatives and modified compounds of these.

One kind of the above-mentioned cyclodextrins can be singly used, or not less than two kinds of them are used in combination.
As such cyclodextrin, α-cyclodextrin, β-cyclodextrin and γ-cyclodextrin are particularly preferable, in which α-cyclodextrin is preferable from the viewpoint of the characteristics of being included.

Additionally, in the present invention, if each of all or some of the hydroxyl groups in the cyclodextrin is modified with the hydrophilic modification group, the modified hydrophilic polyrotaxane becomes soluble in water or the water-like solvent. However, it is preferable from the viewpoint of solubility to water or the water-like solvent, that each of all or some of the hydrophilic modification groups in the cyclodextrin has at least hydrophilic group so that the modified hydrophilic polyrotaxane is hydrophilic.
If the modified hydrophilic polyrotaxane is hydrophilic, each of all or some of the hydrophilic modification groups may have a hydrophobic group.
Additionally, if a solubility improving effect of the modified hydrophilic polyrotaxane to water or the water-like solvent is not so lowered, the hydrophilic modification group may be a polymer, in which the polymer preferably has, for example, a molecular weight of about several thousands from the viewpoint of solubility.

In the modified hydrophilic polyrotaxane of the present invention, the cyclodextrin constituting the cyclic molecule has the hydrophilic modification group in each of all or some of the hydroxyl groups in the cyclodextrin, so that the modified hydrophilic polyrotaxane can become soluble in water or the water-like solvent even in case that the linear molecule discussed after does not have a hydrophylicity.

Further, in the present invention, concrete examples of the hydrophilic group are, for example, alkyl group, carboxyl group, sulphonic acid group, sulfuric ester group, phosphoric ester group, primary to tertiary amino group, quaternary ammonium salt group, hydroxyalkyl group, and the like; however, the hydrophilic group is not limited to these.

In the modified hydrophilic polyrotaxane of the present invention, the above-mentioned hydrophilic group may be used singly with one kind or in combination of not less than two kinds.

In the present invention, it is preferable from the viewpoint of improving the reactivity with other polymers, that each of all or some of the hydrophilic modification groups has a functional group. It is preferable that such a functional group is sterically placed outside of the cyclodextrin, in which reaction of bonding or cross-liking of the modified hydrophilic polyrotaxane with polymer can be readily carried out with this functional group.

Such a functional group may be suitably changed, for example, in accordance with kinds of solvent to be used in case that no cross-linking agent is used. However, such a functional group may be suitably changed in accordance with kinds of cross-linking agent in case that cross-linking agent is used.
Further, in the present invention, concrete examples of the functional group are, for example, hydroxyl group, carboxyl group, amino group, epoxy group, isocyanate group, thiol group, aldehyde group and the like, in which the functional group is not limited to these.

In the modified hydrophilic polyrotaxane of the present invention, the above-mentioned functional group may be used singly with one kind thereof or in combination of not less than two kinds thereof.
Such functional group is particularly a residue group of a compound combined with the hydroxyl groups of the cyclodextrin, and the residue group preferably has hydroxyl group, carboxyl group, amino group, epoxy group and/or isocyanate group, in which hydroxyl group is preferable from the viewpoint of variety of reactions.
A compound forming such a functional group is, for example, propylene oxide; however, the compound is not limited to this.
For example, the compound forming the functional group may be a polymer if the solubility improving effect of the modified hydrophilic polyrotaxane to water or the water-like solvent is not so lowered, in which the polymer preferably has a molecular weight of, for example, several thousands from the viewpoint of solubility.
The above-mentioned functional group is preferably a group which can make a reaction in a condition where the blocking groups discussed after cannot leave.

The linear molecule may substantially have a straight chain and may have a branched chain as far as the linear molecule can include the cyclodextrin constituting the cyclic molecule as the rotator in such a manner that the cyclodextrin is rotatable and can exhibit the pulley effect.
Additionally, the length of the linear molecule is not limited to a particular one as far as the cyclic molecule can exhibit the pulley effect, though it is influenced by the magnitude of the cyclodextrin constituting the cyclic molecule.

The linear molecule preferably has reactive groups at its both end terminals, by which the linear molecule can be readily reacted with the above-mentioned blocking groups.
Such reactive group may be suitably changed in accordance with kinds of the blocking group to be used, in which examples of the reactive group are hydroxyl group, carboxyl group, amino group, thiol group and the like.

Additionally in the present invention, the number (an inclusion amount) of the cyclic molecules included by the linear molecule is preferably within a range of 0.06 to 0.61, more preferably within a range of from 0.11 to 0.48, and furthermore preferably within a range of from 0.24 to 0.41 on the assumption that the maximum inclusion amount is 1, in case that the cyclic molecule is the cyclodextrin.
If the inclusion amount is less than 0.06, the pulley effect may not be exhibited. If the inclusion amount exceeds 0.61, the cyclodextrins as the cyclic molecules are placed too close each other so that the moveability of the cyclodextrin may be lowered. Additionally, insolubility of the cyclodextrin itself in water is strengthened so that the solubility of the obtained polyrotaxane to water or the water-like solvent may be lowered.

Further, in the present invention, the molecular weight of the linear molecule is preferably within a range of from 1,000 to 500,000, more preferably within a range of from 10,000 to 300,000, furthermore preferably within a range of from 10,000 to 100,000.
If the molecular weight is less than 1,000, the number of the cyclodextrin modified with the hydrophilic modification group becomes small so that the solubility in water becomes low. Therefore, the solubility of the obtained polyrotaxane in water or the water-like solvent becomes low, in which the solubility in water or the water-like solvent may lower even in case that the molecular weight exceeds 500,000.
Such a linear molecule is not limited to a particular one, in which the examples of the linear molecule are polyesters such as polyalkylenes, polycaprolactones and the like, polyethers such as polyethylene glycol and the like, polyamids, polyacrylic acids, and linear molecule having benzene ring. Such linear molecule is particularly preferably polyethylene glycol, polycaprolactone, in which polyethylene glycol is preferable from the viewpoint of solubility in water or the water-like solvent.

Next, the blocking group may be any group which can maintain a condition where the linear molecule pierces through the cyclodextrin constituting the cyclic molecule, upon being placed at each of the both end terminals of the linear molecule as discussed above.
Such a group is a group having a "bulkiness" or a group having an "ionic character". Here, "group" means a variety of groups including a molecule group and a polymer group.

Examples of the group having the "bulkiness" are a spherical group and a side wall-shaped group.
Additionally, the ionic character of the group having the "ionic character" and the ionic character of the cyclic molecule are mutually affected, for example, repel each other, so as to maintain a condition where the linear molecule pierces through the cyclic molecule.

Concrete examples of such a blocking group are dinitrophenyl groups such as 2,4-dinitrophenyl group, 3,5-dinitrophenyl group and the like, cyclodextrins, adamantane groups, trityl groups, fluoresceins, pyrenes, and derivatives and modified compounds of these.

Next, a production method of the modified hydrophilic polyrotaxane of the present invention will be discussed.
The modified hydrophilic polyrotaxane as discussed above can be obtained by accomplishing a process including (1) a step of mixing a cyclic molecule and a linear molecule so that the linear molecule includes the cyclic molecule with piecing through the opening section of the cyclic molecule, (2) a step of blocking the both end terminals (the both end terminals of the linear molecule) of an obtained pseudo-polyrotaxane with blocking groups so as to make adjustment to prevent the cyclic molecule from releasing from a piercing condition, and (3) a step of modifying hydroxyl group of cyclodextrin constituting the cyclic molecule of an obtained polyrotaxane with hydrophilic modification group.
The modified hydrophilic polyrotaxane can be obtained also by using, as a cyclic molecule, a compound in which hydroxyl groups of the cyclodextrin has been previously modified with hydrophilic modification groups, at the above step (1). In this case, the above step (3) may be omitted.

By the above production method, the modified hydrophilic polyrotaxane excellent in solubility in water or the water-like solvent as discussed above can be obtained.
In the present invention, the above water-like solvent means a solvent which has a character of making a mutual action between it and water and a strong affinity with water. Concrete examples of the water-like solvent are alcohols such as isopropyl alcohol, butyl alcohol, ethylene glycol and the like, ether esters such as cellosolve acetate, butylcellosolve acetate, diethyleneglycol monoethylether and the like, glycol ethers such as ethyleneglycol monoethylether, ethyleneglycol monobutylether, propyleneglycol monomethylether, and the like, in which the modified hydrophilic polyrotaxane of the present invention exhibits a good solubility in a solvent prepared by mixing not less than two kinds of these.
Of the above solvents, alcohols are preferable, and glycol ethers are more preferable.
A solvent containing a slight amount of an organic solvent such as toluene may be used as the water-like solvent if it has the character of being strong in affinity with water, as a whole.

Next, a cross-linked polyrotaxane of the present invention will be discussed.
The cross-linked polyrotaxane of the present invention is formed by cross-linking the above-mentioned modified hydrophilic polyrotaxane of the present invention and a polymer, in which the polymer is combined with the modified hydrophilic polyrotaxane through the cyclic molecule of the modified hydrophilic polyrotaxane.

Here, the polymer cross-linked with the modified hydrophilic polyrotaxane through the cyclic molecule is not limited to a particular one, and preferably has hydroxyl group, amino group, carboxyl group, epoxy group, vinyl group, thiol group or a photocross-linking group, or a group relating to any combination of these.
Examples of the photocross-linking group are cinnamic acid, coumarin, chalcone, anthracene, styrylpyridine, styrylpyridinium salt and styrylquinoline salt and the like.

Additionally, not less than two kinds of the polymers may be used in the present invention. In this case, it is required that at least one kind polymer is combined with the modified hydrophilic polyrotaxane through the cyclic molecule.
Further, such a polymer may be a homopolymer or a copolymer. In case of the copolymer, the copolymer may be constituted of not less than two kinds of monomers, and may be any of a block copolymer, an alternating copolymer, a random copolymer and a graft copolymer.

Concrete examples of such a polymer are polyvinyl alcohol, polyvinyl pyrrolidone, poly(meth)acrylic acid, cellulose-based resin such as carboxylmethyl cellulose, hydroxyethyl cellulose, hydroxypropyl cellulose and the like, polyacryl amide, polyethylene oxide, polyethylene glycol, polypropylene glycol, polyvinyl acetal-based resin, polyvinylmethyl ether, polyamine, polyethylene imine, casein, gelatin, starch, and a copolymer of these, polyolefin-based resin such as polyethylene, polypropylene, and a copolymer resin of these with other olefin-based monomers, polyester resin, polyvinyl chloride resin, polystyrene-based resin such as polystyrene, acrylonitrile-styrene copolymer resin or the like, acrylic resin such as polymethylmethacrylate, (meth)acrylate ester copolymer, acrylonitrile-methyl acrylate copolymer or the like, polycarbonate resin, polyurethane resin, vinyl chloride-vinyl acetate copolymer resin, polyvinyl butyral resin and a derivative or a modified compound of these, polyisobutylene, polytetrahydrofuran, polyaniline, acrylonitrile-butadiene-styrene copolymer (ABS resin), polyamides such as Nylon (registered trade mark) and the like, polyimides, polydienes such as polyisoprene, polybutadiene and the like, polysiloxanes such as polydimethyl siloxane and the like, polysulfones, polyimines, polyacetic anhydrides, polyureas, polysulfides, polyphosphazenes, polyketones, polyphenylenes, polyhaloolefins, and derivatives of these.
The derivatives preferably have hydroxyl group, amino group, carboxyl group, epoxy group, vinyl group, thiol group, or the photocross-linking group, or a group relating to a combination of these.

In the present invention, the compounding ratio of the modified hydrophilic polyrotaxane and the above-mentioned polymer is suitably changed in accordance with applications and desired physical properties, and can be typically within a range of from 1/500 to 10/1 in weight ratio (modified hydrophilic polyrotaxane / polymer).

In the cross-linked polyrotaxane of the present invention, combining between the cyclic molecule of the polyrotaxane and the polymer may be made through a chemical bonding with a functional group or a chemical bonding with a cross-linking agent.
As the cross-linking agent, one having a molecular weight of less than 2000, preferably less than 1000, more preferably less than 600, furthermore preferably less than 400 may be used.

Concrete examples of such a cross-linking agent are cyanuric chloride, trimethoyl chloride, terephthaloyl chloride, epichlorohydrin, dibromobenzene, glutaraldehyde, phenylene diisocyanate, tolylene diisocyanate, divinyl sulfone, 1,1'-carbonyl diimidazole, and alkoxy silanes, in which these are used in singly with one kind or in combination of not less than two kinds in the present invention; however, a detail discussion will be made after.

As discussed above, the linear molecule constituting the modified hydrophilic polyrotaxane preferably has a molecular weight ranging from 1,000 to 500, 000; however, the linear molecule preferably has a molecular weight ranging from 10,000 to 60,000 and more preferably has a molecular weight ranging from 20,000 to 35,000 particularly in case of the cross-linked polyrotaxane.

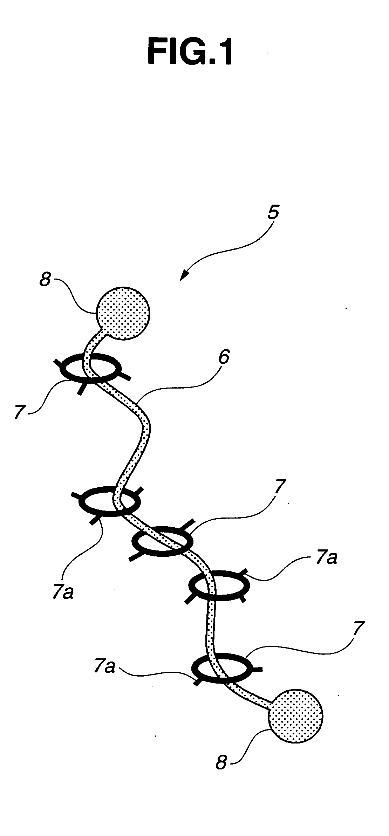

Fig. 1 is a schematic illustration which conceptually shows the modified hydrophilic polyrotaxane of the present invention.
In the same figure, this modified hydrophilic polyrotaxane 5 has the linear molecule 6, the cyclodextrin 7 as the cyclic molecule, and the blocking groups 8 placed at the both end terminals of the linear molecule 6, in which the linear molecule 6 includes the cyclic molecule 7 with piercing through the opening section of the cyclic molecule 7.
The cyclodextrin 7 has the hydrophilic modification groups 7a.

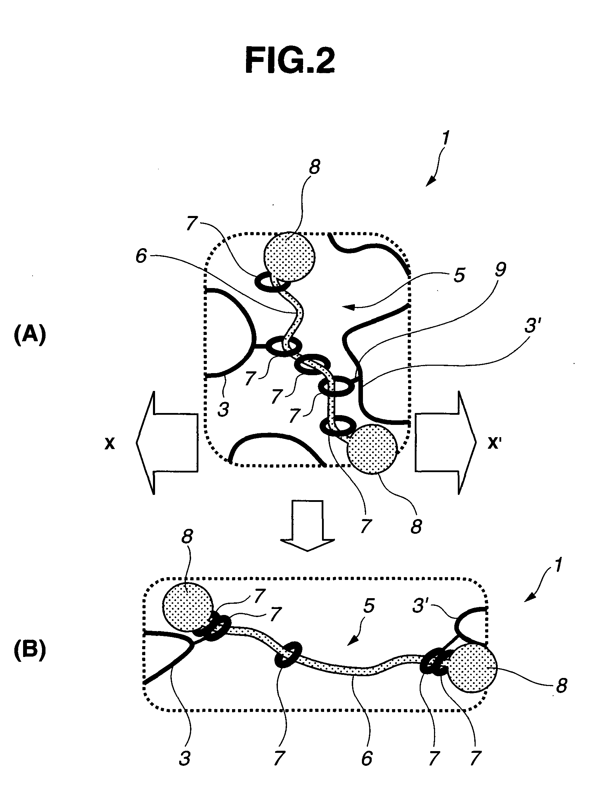

Fig. 2 is a schematic illustration which conceptually shows the cross-linked polyrotaxane of the present invention.
In the same figure, the cross-linked polyrotaxane 1 has the polymer 3 and the modified hydrophilic polyrotaxane 5. The modified hydrophilic polyrotaxane 5 has the linear molecule 6, the cyclodextrin 7 as the cyclic molecule, and the blocking groups 8 placed at the both end terminals of the linear molecule 6, in which the linear molecule 6 includes the cyclodextrin as the cyclic molecule with piercing through the opening section of the cyclic molecule 7. This modified hydrophilic polyrotaxane 5 is combined at cross-linking points 9 with the polymer 3 and the polymer 3' through the cyclodextrins 7.
The cyclodextrin 7 has the hydrophilic modification groups 7a though not shown.

When a deformation stress in a direction of arrows X-X' at an (A) section in Fig. 2 is loaded to the cross-linked polyrotaxane having such a configuration, the cross-linked polyrotaxane 1 can deform as indicated at a (B) section in Fig. 2 thereby absorbing this stress.
In other words, as shown in the (B) section in Fig. 2, the cyclodextrin as the cyclic molecule is movable along the linear molecule 6 under the pulley effect, and therefore the cross-linked polyrotaxane can absorb the above-mentioned stress thereinside.

Thus, the cross-linked polyrotaxane has the pulley effect as shown in the figure, and therefore has excellent elasticity, viscoelasticity and mechanical properties as compared with conventional gel-like materials.
Additionally, the modified hydrophilic polyrotaxane of the present invention as a precursor of this cross-linked polyrotaxane is improved in solubility in water or the water-like solvent, and therefore its cross-linking or the like in water or the water-like solvent is readily made.

Accordingly, the cross-linked polyrotaxane of the present invention can be readily obtained under a condition where water or the water-like solvent exists. Particularly, the cross-linked polyrotaxane can be readily produced by cross-linking the modified hydrophilic polyrotaxane of the present invention with the polymer which is soluble in water or the water-like solvent.
In other words, the cross-linked polyrotaxane of the present invention is extended in its application range and applicable, for example, to paint or adhesive using a coating film polymer which is soluble in water or the water-like solvent, particularly paint, resin base material and adhesive for automotive vehicles requiring a car-washing resistance, a scratching resistance, a chipping resistance, an impact resistance and a weather resistance, and also to paint, resin base material and the like for home electric appliances, in which the excellent pulley effect can be exhibited in such applications.

From the other viewpoints, the cross-linked polyrotaxane of the present invention is formed as a composite of the above-mentioned polymer and the modified hydrophilic polyrotaxane without degrading the physical properties of the polymer which is a cross-linking object of the modified hydrophilic polyrotaxane.
Accordingly, according to the below-discussed production method of the cross-linked polyrotaxane of the present invention, not only a material having both the physical properties of the above-mentioned polymer and the physical properties of the modified hydrophilic polyrotaxane itself can be obtained, but also a water-soluble material having a desired mechanical strength, particularly a gel-like material can be obtained by selecting kinds of the polymer.

Next, a production method of the cross-linked polyrotaxane of the present invention will be discussed.
This cross-linked polyrotaxane can be produced first by producing the modified hydrophilic polyrotaxane as discussed above, and (a) mixing the obtained modified hydrophilic polyrotaxane with the polymer, (b) physically and/or chemically making cross-linking of at least a part of the polymer, and (c) combining the at least a part of the polymer and the polyrotaxane through the cyclic molecule.
The modified hydrophilic polyrotaxane of the present invention is soluble in water or the water-like solvent, and therefore the steps (a) to (c) can be smoothly carried out in water, the water-like solvent or a mixture solvent of these.

At the step (b), a chemical cross-linking is preferably made and carried out by the cross-linking agent as discussed above. Additionally, the step (b) and the step (c) may be almost simultaneously carried out.

The mixing step at the step (a) can be carried out without a solvent or in a solvent, depending on the polymer. The useable solvents are not limited to particular ones; however, examples of the solvents are water, toluene, xylene, benzene, anisole, cyclohexane, N-methylpyrrolidone, dimethyl formamide, dimethyl acetoamide, methyl ethyl ketone, chloroform, dichloromethane, carbon tetrachloride, hexafluoro isopropylalcohol, tetrahydrafuran, dioxane, acetone, ethyl acetate, dimethyl sulfoxide, acetonitrile, and the like.

The cross-linking step at the step (b) may be carried out under conventional and known cross-linking conditions, depending on the polymer to be used.
For example, (i) in case that the polymer has an active group substituent such as epoxy group, a cross-linking reaction may take place under heating or in presence of active hydrogen such as that in amine or acid anhydride. Additionally, the cross-linking reaction can take place under light irradiation in presence of a photoacid generator or a photobase generator.
(ii) In case that the polymer has an unsaturated double bond such as a vinyl group, the cross-linking reaction can take place under heating or light irradiation in presence of heat or a photoradical generator.
(iii) In case that the polymer has the above-mentioned photocross-linking group, the cross-linking reaction can take place under heating or light irradiation.
(iv) In case that the polymer has a hydroxyl group, an amino group, a carboxyl group and the like, the cross-linking reaction can take place in presence of multi-substituted isocyanates, carbodiimides, triazines or silanes.
(v) In case that the polymer has no group, the cross-linking reaction can take place under electron beam irradiation.

The combining step at the step (c) is carried out under a chemical reaction of the groups at the main chain and/or the side chain of the polymer, for example, hydroxyl group, amino group, carboxyl group, epoxy group, vinyl group, thiol group, photocross-linking group and the like, with the group in the cyclic molecule, for example, hydroxyl group, amino group, carboxyl group, epoxy group, vinyl group, thiol group, photocross-linking group and the like.
Although the condition of this combining step is affected by the groups of the polymer, the groups of the cyclic molecule and the like, the above-mentioned cross-lining conditions can be applied.

The cross-linked polyrotaxane of the present invention can be produced even by obtaining the polymer from the corresponding monomer and by using the obtained polymer, in the above-mentioned production method.

Next, a solvent of the present invention will be discussed.
The solvent of the present invention is a solvent for dissolving the above-mentioned modified hydrophilic polyrotaxane and contains either one of water and the water-like solvent or both of these.
The solvent may contain a slight amount of an organic solvent such as toluene if it can dissolve the modified hydrophilic polyrotaxane. By using such a solvent, the modified hydrophilic polyrotaxane can be dissolved to a high concentration of 30 %, so that the modified hydrophilic polyrotaxane is readily applied to an aqueous paint.

### EXAMPLE

Hereafter, the present invention will be further discussed with reference to some examples; however, the present invention is not limited to these examples.

### (Example 1)

(1) Preparation of PEG-carboxylic acid by TEMPO oxidation of PEG
Polyethylene glycol (PEG)(molecular weight: 5000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Amount reduction of α-CD and Blocking of the Inclusion Complex using Adamantane amine and BOP reagent reaction system
The above-mentioned prepared inclusion complex in an amount of 14 g was dispersed in a mixture solvent of dimethylformamide / dimethylsulfoxide (DMF / DMSO) (75 / 25 in volume ratio).
On the one hand, 3 g of benzotirazole-1-yl-oxy-tris (dimethylamino) phosphonium hexafluorophosphate (BOP reagent), 1 g of 1-hydroxybenzotriazole (HOBt), 1.4 g of adamantane amine and 1.25 ml of diisopropylethyl amine were dissolved in this order in 10 ml of DMF at room temperature. This solution was added to the above-mentioned prepared dispersion solution and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Hydroxylpropylation of Hydroxyl Groups of Cyclodextrin
The above-mentioned prepared polyrotaxane in an amount of 500 mg was dissolved in 50 ml of 1 mol/l aqueous solution of NaOH, followed by addition of 3.83 g (66 mmol) of propylene oxide. Then, it was stirred overnight in an atmosphere of argon at room temperature. Then, it was neutralized with 1 mol/l aqueous solution of HCl, and dialyzed by a dialysis tube. Thereafter, it was lyophilized and recovered thereby obtaining a modified hydrophilic polyrotaxane of this Example. The obtained modified hydrophilic polyrotaxane was identified with ¹H-NMR and GPC thereby confirming that it was a desired polyrotaxane. Here, the inclusion amount of α-CD was 0.06, and the modification degree with hydrophilic modification groups was 0.1.

### (Example 2)

(1) Preparation of PEG-carboxylic acid by TEMPO oxidation of PEG
Polyethylene glycol (PEG)(molecular weight: 5000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3)Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Hydroxylpropylation of Hydroxyl Groups of Cyclodextrin
The above-mentioned prepared polyrotaxane in an amount of 500 mg was dissolved in 50 ml of 1 mol/l aqueous solution of NaOH, followed by addition of 3.83 g (66 mmol) of propylene oxide. Then, it was stirred overnight in an atmosphere of argon at room temperature. Then, it was neutralized with 1 mol/l aqueous solution of HCl, and dialyzed by a dialysis tube. Thereafter, it was lyophilized and recovered thereby obtaining a modified hydrophilic polyrotaxane of this Example.
The obtained modified hydrophilic polyrotaxane was identified with ¹H-NMR and GPC thereby confirming that it was a desired polyrotaxane. Here, the inclusion amount of α-CD was 0.61, and the modification degree with hydrophilic modification groups was 0.1.

### (Example 3)

(1) Preparation of PEG-carboxylic acid by TEMPO oxidation of PEG
Polyethylene glycol (PEG)(molecular weight: 100,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4°C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3)Amount reduction of α-CD and Blocking of the Inclusion Complex using Adamantane amine and BOP reagent reaction system
The above-mentioned prepared inclusion complex in an amount of 14 g was dispersed in a mixture solvent of dimethylformamide / dimethylsulfoxide (DMF / DMSO) (75 / 25 in volume ratio).
On the one hand, 3 g of benzotirazole-1-yl-oxy-tris (dimethylamino) phosphonium hexafluorophosphate (BOP reagent), 1 g of 1-hydroxybenzotriazole (HOBt), 1.4 g of adamantane amine and 1.25 ml of diisopropylethyl amine were dissolved in this order in 10 ml of DMF at room temperature. This solution was added to the above-mentioned prepared dispersion solution and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Hydroxylpropylation of Hydroxyl Groups of Cyclodextrin
The above-mentioned prepared polyrotaxane in an amount of 500 mg was dissolved in 50 ml of 1 mol/l aqueous solution of NaOH, followed by addition of 3.83 g (66 mmol) of propylene oxide. Then, it was stirred overnight in an atmosphere of argon at room temperature. Then, it was neutralized with 1 mol/l aqueous solution of HCl, and dialyzed by a dialysis tube. Thereafter, it was lyophilized and recovered thereby obtaining a modified hydrophilic polyrotaxane of this Example.
The obtained modified hydrophilic polyrotaxane was identified with ¹H-NMR and GPC thereby confirming that it was a desired polyrotaxane. Here, the inclusion amount of α-CD was 0.06, and the modification degree with hydrophilic modification groups was 0.1.

### (Example 4)

(1) Preparation of PEG-carboxylic acid by TEMPO oxidation of PEG
Polyethylene glycol (PEG)(molecular weight: 100,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in an amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Hydroxylpropylation of Hydroxyl Groups of Cyclodextrin
The above-mentioned prepared polyrotaxane in an amount of 500 mg was dissolved in 50 ml of 1 mol/l aqueous solution of NaOH, followed by addition of 3.83 g (66 mmol) of propylene oxide. Then, it was stirred overnight in an atmosphere of argon at room temperature. Then, it was neutralized with 1 mol/l aqueous solution of HCl, and dialyzed by a dialysis tube. Thereafter, it was lyophilized and recovered thereby obtaining a modified hydrophilic polyrotaxane of this Example.
The obtained modified hydrophilic polyrotaxane was identified with ¹H-NMR and GPC thereby confirming that it was a desired polyrotaxane. Here, the inclusion amount of α-CD was 0.61, and the modification degree with hydrophilic modification groups was 0.1.

### (Example 5)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Methylation of Hydroxyl Groups of Cyclodextrin
The above-mentioned prepared polyrotaxane in an amount of 500 mg was dissolved in 20 ml of DMSO, and then a solution prepared by dissolving 2.24 g (20 mmol) of potassium-t-butoxide in 30 ml of DMSO was added, followed by stirring for about 1 hour. Methyl iodide in an amount of 2.84 g (20 mmol) was added to it, and then stirring was made overnight at the room temperature and in an atmosphere of argon. It was diluted with 100 to 200 ml of water to be dialyzed, followed by being lyophilized and recovered.
The obtained modified hydrophilic polyrotaxane was identified with ¹H-NMR and GPC thereby confirming that it was a desired polyrotaxane. Here, the inclusion amount of α-CD was 0.61, and the modification degree with hydrophilic modification groups was 0.1.

### (Example 6)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Methylation of Hydroxyl Groups of Cyclodextrin
The above-mentioned prepared polyrotaxane in an amount of 500 mg was dissolved in 20 ml of DMSO, and then a solution prepared by dissolving 2.24 g (20 mmol) of potassium-t-butoxide in 30 ml of DMSO was added, followed by stirring for about 1 hour. Methyl iodide in an amount of 2.84 g (20 mmol) was added to it, and then stirring was made overnight at the room temperature and in an atmosphere of argon. It was diluted with 100 to 200 ml of water to be dialyzed, followed by being lyophilized and recovered.
The obtained modified hydrophilic polyrotaxane was identified with ¹H-NMR and GPC thereby confirming that it was a desired polyrotaxane. Here, the inclusion amount of α-CD was 0.61, and the modification degree with hydrophilic modification groups was 0.1.

### (Example 7)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Introduction of Carboxyl groups to Hydroxyl Groups of Cyclodextrin
The above-mentioned prepared polyrotaxane in an amount of 1 g was dissolved in 80 ml of DMSO, and then 10 g of finely powdered NaOH was added in limited amounts. Thereafter, a vigorous stirring was made in an atmosphere of argon in order to make an effective dispersion. After stirring for 1 hour, 2 g of monochloroacetic acid dissolved in 20 mol of DMSO was slowly dropped so as to accomplish a reaction for 24 hours at the room temperature. When the reaction had terminated, it was dropped into 300 to 400 ml of water under vigorous stirring, and then a neutralization with 50 ml of 5N hydrochloric acid was immediately carried out. A dialysis was made with pure water thereby remove non-reacted reagent and NaOH, and then lyophilization was carried out thereby obtaining a carboxylic acid-added polyrotaxane.

### (Example 8)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Introduction of Sulfonic acid-containing groups to Hydroxyl Groups of Cyclodextrin.
The above-mentioned prepared polyrotaxane in an amount of 1 g was dissolved in 80 ml of DMSO, and then 10 g of finely powdered NaOH was added in limited amounts. Thereafter, a vigorous stirring was made in an atmosphere of argon in order to make an effective dispersion. After stirring for 1 hour, 3.5 g of sodium bromoethane sulfonate dissolved in 20 mol of DMSO was slowly dropped so as to accomplish a reaction for 24 hours at the room temperature. When the reaction had terminated, it was dropped into 300 to 400 ml of water under vigorous stirring, and then a neutralization with 50 ml of 5N hydrochloric acid was immediately carried out. A dialysis was made with pure water thereby remove non-reacted reagent and NaOH, and then lyophilization was carried out thereby obtaining a sulfonic acid-added polyrotaxane.

### (Example 9)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Introduction of Amine-containing groups to Hydroxyl Groups of Cyclodextrin
The above-mentioned prepared polyrotaxane in an amount of 1 g was dissolved in 80 ml of DMSO, and then 10 g of finely powered NaOH was added in limited amounts. Thereafter, a vigorous stirring was made in an atmosphere of argon in order to make an effective dispersion. After stirring for 1 hour, 2 g of bromoethyl ammonium bromide dissolved in 20 mol of DMSO was slowly dropped so as to accomplish a reaction for 24 hours at the room temperature. When the reaction had terminated, it was dropped into 300 to 400 ml of water under vigorous stirring, and then a neutralization with 50 ml of 5N hydrochloric acid was immediately carried out. A dialysis was made with pure water thereby remove non-reacted reagent and NaOH, and then lyophilization was carried out thereby obtaining an amino group-added polyrotaxane.

### (Example 10)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Preparation of Polyrotaxane isopropyl carbamate
The above-mentioned prepared polyrotaxane in an amount of 500 mg was dissolved in 5 ml of DMSO, and then 100 µl of dibutyltin dilaurate and 0.59 g of isopropyl isocyanate were added. Thereafter, stirring was made overnight at room temperature and in an atmosphere of argon. Precipitation was made with a large amount of diethyl ether, and then a filtration was made to accomplish a recovery.

### (Comparative Example 1)

(1) Preparation of PEG-carboxylic acid by TEMPO oxidation of PEG
Polyethylene glycol (PEG)(molecular weight: 5000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3)Amount reduction of α-CD and Blocking of the Inclusion Complex using Adamantane amine and BOP reagent reaction system
The above-mentioned prepared inclusion complex in an amount of 14 g was dispersed in a mixture solvent of dimethylformamide / dimethylsulfoxide (DMF / DMSO) (75 / 25 in volume ratio).
On the one hand, 3 g of benzotirazole-1-yl-oxy-tris (dimethylamino) phosphonium hexafluorophosphate (BOP reagent), 1 g of 1-hydroxybenzotriazole (HOBt), 1.4 g of adamantane amine and 1.25 ml of diisopropylethyl amine were dissolved in this order in 10 ml of DMF at room temperature. This solution was added to the above-mentioned prepared dispersion solution and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining a purified polyrotaxane of this Example.
The obtained polyrotaxane was identified with ¹H-NMR and GPC thereby confirming that it was a desired polyrotaxane. Here, the inclusion amount of α-CD was 0.06.

### (Comparative Example 2)

(1) Preparation of PEG-carboxylic acid by TEMPO oxidation of PEG
Polyethylene glycol (PEG)(molecular weight: 5000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3)Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining a purified polyrotaxane of this Example.
The obtained polyrotaxane was identified with ¹H-NMR and GPC thereby confirming that it was a desired polyrotaxane. Here, the inclusion amount of α-CD was 0.61.

### (Comparative Example 3)

(1) Preparation of PEG-carboxylic acid by TEMPO oxidation of PEG
Polyethylene glycol (PEG)(molecular weight: 100,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3)Amount reduction of α-CD and Blocking of the Inclusion Complex using Adamantane amine and BOP reagent reaction system
The above-mentioned prepared inclusion complex in an amount of 14 g was dispersed in a mixture solvent of dimethylformamide / dimethylsulfoxide (DMF / DMSO) (75 / 25 in volume ratio).
On the one hand, 3 g of benzotirazole-1-yl-oxy-tris (dimethylamino) phosphonium hexafluorophosphate (BOP reagent), 1 g of 1-hydroxybenzotriazole (HOBt), 1.4 g of adamantane amine and 1.25 ml of diisopropylethyl amine were dissolved in this order in 10 ml of DMF at room temperature. This solution was added to the above-mentioned prepared dispersion solution and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining a purified polyrotaxane of this Example. The obtained polyrotaxane was identified with ¹H-NMR and GPC thereby confirming that it was a desired polyrotaxane. Here, the inclusion amount of α-CD was 0.06.

### (Comparative Example 4)

(1) Preparation of PEG-carboxylic acid by TEMPO oxidation of PEG
Polyethylene glycol (PEG)(molecular weight: 100,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in an amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining a purified polyrotaxane of this Example.
The obtained polyrotaxane was identified with ¹H-NMR and GPC thereby confirming that it was a desired polyrotaxane. Here, the inclusion amount of α-CD was 0.61.

### (Comparative Example 5)

(1) Preparation of PEG-carboxylic acid by TEMPO oxidation of PEG
Polyethylene glycol (PEG)(molecular weight: 35,000) in an amount of 10g, 100 mg of TEMPO (2,2,6,6-tetramethyl-1-piperidinyl-oxy radical) and 1 g of sodium bromide were dissolved in 100 ml of water. An aqueous solution of commercially available sodium hypochlorite (available chlorine concentration: 5 %) in amount of 5 ml was added and stirred at room temperature for 10 minutes. In order to decompose excessive sodium hypochlorite, ethanol was added to an extent of 5 ml in maximum so as to terminate the reaction.
An extraction using 50 ml of methylene chloride was repeated three times thereby to extract components other than inorganic salts. Thereafter, methylene chloride was distilled out from the extracted components by an evaporator. Then, the components were dissolved in warm ethanol and then allowed to stand in a freezer (-4 °C) overnight thereby extracting only PEG-carboxylic acid, followed by recovering and drying.

(2) Preparation of Inclusion Complex by using PEG-carboxylic acid and α-CD
The above-mentioned prepared PEG-carboxylic acid in an amount of 3 g and 12 g of α-cyclodextrin (α-CD) were respectively dissolved in 50 ml of 70 °C warm water and 50 ml of 70 °C warm water which were respectively prepared, upon which they were mixed and well stirred, followed by being allowed to stand in a refrigerator (4 °C) overnight. Then, an inclusion complex precipitated in a cream-state was lyophilized and recovered.

(3) Blocking of the Inclusion Complex using Adamantane amine and BOP reagent reaction system
BOP reagent in amount of 3 g, 1 g of HOBt, 1.4 g of adamantane amine and 1.25 ml of diisopropylethyl amine were dissolved in this order in 10 ml of DMF at room temperature. To this, 14 g of the above-mentioned prepared inclusion complex was added, and quickly shaken to be mixed.
A sample in a slurry state was allowed to stand in a refrigerator (4 °C) overnight. After being allowed to stand overnight, 50 ml of a mixture solvent of DMF / methanol (1 / 1 in volume ratio) was added, and then it was mixed and centrifuged, followed by discarding a supernatant. Washing with the above-mentioned mixture solvent of DMF / methanol was repeated two times, and thereafter washing with 100 ml of methanol was further repeated two times under a similar centrifugation.
An obtained precipitate was dried under a vacuum-drying, and thereafter it was dissolved in 50 ml of DMSO, upon which an obtained transparent solution was dropped into 700 ml of water thereby precipitating polyrotaxane. The precipitated polyrotaxane was recovered by a centrifugation, and then vacuum-dried or lyophilized.
A cycle including dissolving in DMSO, precipitation in water, recovery and drying, as above-mentioned, was repeated two times, thereby finally obtaining purified polyrotaxane.

(4) Hydroxylpropylation of Hydroxyl Groups of Cyclodextrin
The above-mentioned prepared polyrotaxane in an amount of 500 mg was dissolved in 50 ml of 1 mol/l aqueous solution of NaOH, followed by addition of 3.83 g (66 mmol) of propylene oxide. Then, it was stirred overnight in an atmosphere of argon at room temperature. Then, it was neutralized with 1 mol/l aqueous solution of HCl, and dialyzed by a dialysis tube. Thereafter, it was lyophilized and recovered.

(5) Hydrophobic group modification of Polyrotaxane
To 500 mg of the above-mentioned prepared hydroxylpropylated polyrotaxane, 10 ml of ε-caprolactone dried by a molecular sieve was added and stirred at the room temperature for 30 minutes so as to be infiltrated. Then, 0.2 ml of tin 2-ethylhexanoate was added, and then a reaction was carried out at 100 °C for 1 hour.
After completion of the reaction, a sample was dissolved in 50 ml of toluene and dropped into 450 ml of stirred hexane so as to be precipitated, recovered and dried, thereby obtaining a modified hydrophilic polyrotaxane of this Example.
The obtained modified hydrophilic polyrotaxane was identified with ¹H-NMR and GPC thereby confirming that it was a desired polyrotaxane. Here, the inclusion amount of α-CD was 0.61, and the modification degree with hydrophilic modification groups was 0.02.
The characteristics of the above-mentioned modified hydrophilic polyrotaxanes and polyrotaxanes of respective Examples are shown in Table 1.

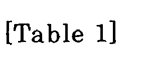

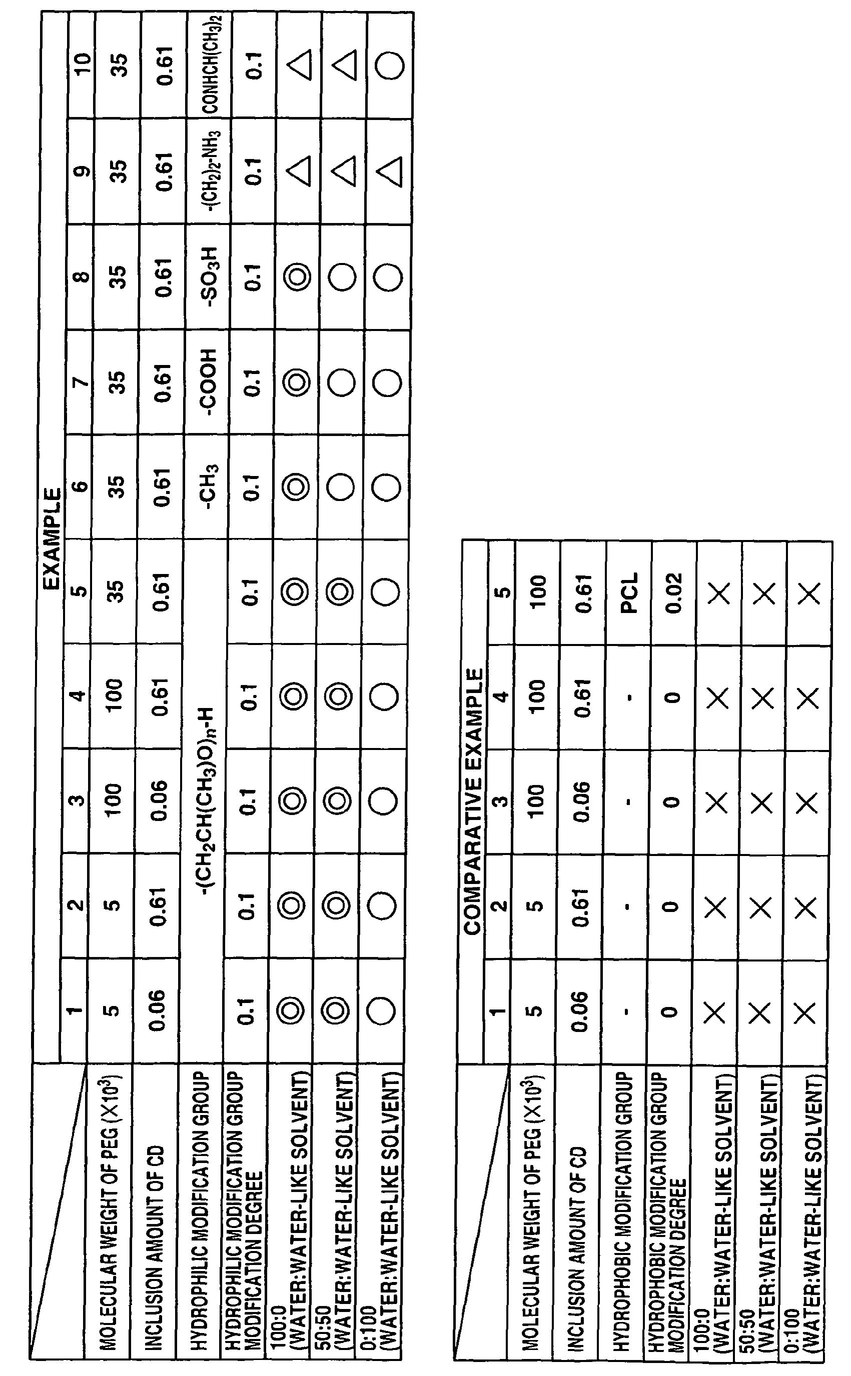

### [Performance evaluation]

### (Solubility test)

The solubility of the modified hydrophilic polyrotaxanes and polyrotaxanes of the above-mentioned respective Examples in water or the water-like solvent were examined under conditions mentioned below. Obtained results are shown in Fig. 1, together with them.
In Table 1, "⓪" indicates the fact that not less than 0.75 g was dissolved; "○" indicates the fact that not less than 0.25 g and less than 0.75 g was dissolved; "△" indicates the fact that less than 0.25 g was dissolved; and "X" indicates insolubility.

### (Test conditions)

To 10 g of 25 °C water (pH 7) or the water-like solvent (ethyleneglycol monoethylether), 1 g of the polyrotaxane of each Example was gradually added thereby examining the solubility.

As apparent from Table 1, the modified hydrophilic polyrotaxanes of Examples 1 to 9 within the scope of the present invention are soluble in water or the water-like solvent such as ethyleneglycol monoethylether; however, it will be understood that the polyrotaxanes of Comparative Examples 1 to 5 are inferior in solubility in these.
Therefore, the modified hydrophilic polyrotaxanes of Examples 1 to 9 are applicable to a paint using a coating film polymer soluble in water or the water-like solvent, an adhesive, a fat and oil and the like.

### BRIEF DESCRIPTION OF DRAWINGS

[Fig. 1] A schematic illustration conceptually showing a modified hydrophilic polyrotaxane of the present invention.
[Fig. 2] A schematic illustration conceptually showing a cross-liked polyrotaxane of the present invention.

### EXPLANATION OF REFERENCE NUMERALS

- 1: cross-linked polyrotaxane
- 3, 3': polymer
- 5: modified hydrophilic polyrotaxane
- 6: linear molecule
- 7: cyclic molecule (cyclodextrin)
- 7a: hydrophilic modification group
- 8: blocking group
- 9: cross-linking point

## Claims

1. A modified hydrophilic polyrotaxane comprising a cyclic molecule, a linear molecule including the cyclic molecule with piercing through the cyclic molecule, and blocking groups which are placed at both end terminals of the linear molecule to prevent the cyclic molecule from leaving from the linear molecule,
wherein the cyclic molecule is cyclodextrin, and each of all or a part of the hydroxyl groups in the cyclodextrin is modified with a hydrophilic modification group.

2. A modified hydrophilic polyrotaxane as claimed in Claim 1, wherein the modified hydrophilic polyrotaxane has a solubility parameter ranging from 8.5 to 23.4 so as to be soluble and/or uniformly dispersible in water or a water-like solvent.

3. A modified hydrophilic polyrotaxane as claimed in Claim 1, wherein a modification degree of the cyclodextrin with the hydrophilic modification group is not less than 0.1 relative to 1 which is the maximum number of the hydroxyl groups of the cyclodextrin which hydroxyl groups are capable of being modified.

4. A modified hydrophilic polyrotaxane as claimed in Claim 1 or 3, wherein the cyclodextrin is at least one selected from the group consisting of α-cyclodextrin, β-cyclodextrin, and γ-cyclodextrin.

5. A modified hydrophilic polyrotaxane as claimed in any of Claim 1 to 4, wherein each of all or a part of the hydrophilic modification group has at least hydrophilic group so as to provide a hydrophilicity as the active polyrotaxane.

6. A modified hydrophilic polyrotaxane as claimed in Claim 5, wherein the hydrophilic group modifies the hydroxyl group of the cyclodextrin in order to dissolve and/or uniformly disperse the polyrotaxane in water or a water-like solvent, and is at least one selected from the group consisting of alkyl group, carboxyl group, sulphonic acid group, sulfuric ester group, phosphoric ester group, amino group, quaternary ammonium salt group, and hydroxyalkyl group.

7. A modified hydrophilic polyrotaxane as claimed in any of Claims 1 to 6, wherein each of all or a part of the hydrophilic modification group has a functional group.

8. A modified hydrophilic polyrotaxane as claimed in Claim 7, wherein the functional group is a residue group of a compound combined with the hydroxyl groups of the cyclodextrin, the residue group having at least one selected from the group consisting of hydroxyl group, carboxyl group, amino group, epoxy group, and isocyanate group.

9. A modified hydrophilic polyrotaxane as claimed in any of Claims 1 to 7, wherein the cyclodextrin has an inclusion amount ranging from 0.06 to 0.61 relative to 1 which is the maximum inclusion amount of the cyclodextrin capable of being included by the linear molecule.

10. A modified hydrophilic polyrotaxane as claimed in any of Claims 1 to 9,wherein the linear molecule has a molecular weight ranging from 1,000 to 500,000.

11. A modified hydrophilic polyrotaxane as claimed in any of Claims 1 to 10, wherein the linear molecule is at least one of polyethylene glycol and polycaprolactone.

12. A modified hydrophilic polyrotaxane as claimed in any of Claims 1 to 11, wherein the modified hydrophilic polyrotaxane is soluble in a water-like solvent.

13. A production method for producing the modified hydrophilic polyrotaxane as claimed in any of Claims 1 to 12, comprising: (1) mixing cyclodextrin and a linear molecule so as to cause the linear molecule to include cyclodextrin with piecing through an opening section of the cyclodextrin; (2) blocking both end terminals of the linear molecule, serving as both end terminals of an obtained pseudo-polyrotaxane, with blocking groups so as to make adjustment to prevent the cyclic molecule from releasing from a piercing condition; and (3) modifying a hydroxyl group of the cyclodextrin of an obtained polyrotaxane with a hydrophilic modification group.

14. A cross-linked polyrotaxane formed by combining the modified hydrophilic polyrotaxane as claimed in any of Claims 1 to 12 and a polymer through the cyclic molecule.

15. A solvent for dissolving the modified hydrophilic polyrotaxane as claimed in any of Claims 1 to 12, the solvent containing at least one of water and a water-like solvent.
